# DEMANDE DE BREVET EUROPEEN

(11) **EP 4 836 376 A1**
(43) Date de publication de la demande: **04.11.2026**
(21) Numéro de dépôt: 26159292.7
(22) Date de dépôt: 18.02.2026
(51) Int. Cl.: H04L 61/2514, H04L 61/2517

(54) **MÉTHODE DE COMMUTATION DE TRAMES POUR RÉSEAU**

(30) Priorité: 30.04.2025 FR 2504587; 30.04.2025 LU 601432
(71) Demandeur: Cetrac Technologies, 75004 Paris (FR)
(72) Inventeur: DELWASSE, Serge, 75004 Paris (FR); LAPORTE, Vincent, 75004 Paris (FR)
(74) Mandataire: Dennemeyer & Associates S.A.

(57) **Abrégé**

La présente divulgation concerne un système (100) de séparation de réseaux comprenant une interface d'entrée (107) recevant des trames de données depuis un réseau source, lesdites trames de données comportant des informations d'adresse source et destination, un module d'analyse et de filtrage configuré pour classifier les trames selon des critères prédéterminés, un module de modification d'adresses (113) configuré pour substituer, en fonction d'une table de correspondance d'une station de base (101), une partie des informations d'adresse source et des informations d'adresse destination des trames de données classifiées, ladite station de base (101) et une interface de sortie (114) configurée pour transmettre les trames de données modifiées vers un réseau de destination.

## Description

### Contexte de l'invention

La présente invention concerne le domaine des télécommunications.

Plus particulièrement, la présente invention se rapporte à un système de séparation de réseaux et à un procédé de traitement de trames de données dans un tel système de séparation de réseaux.

### Arrière-plan de l'invention

Il est connu des dispositifs de séparation de réseaux destinés à modifier les adresses des trames de données UDP (ou « User Datagram Protocol », en anglais) et TCP (ou « Transmission Control Protocol », en anglais) pour assurer une communication sécurisée entre deux segments de réseau distincts. Grâce à ces dispositifs, les adresses MAC, IP et les ports TCP/UDP des trames sont ajustés pour correspondre aux configurations spécifiques de chaque segment, facilitant ainsi une communication transparente et sécurisée.

Par exemple, le brevet américain No. US 7,453,874 B1 traite de procédés pour mettre à jour l'en-tête de paquets de données réseau sans nécessiter d'effectuer des recalculs systématiques sur l'ensemble de la charge utile. Il est ainsi connu de traiter des paquets IP encapsulant des segments TCP ou des datagrammes UDP en divisant chaque paquet en deux parties afin d'améliorer les performances des commutateurs réseau.

Toutefois, les dispositifs et les procédés connus reposent généralement sur l'utilisation de processeurs exécutant des logiciels et/ou plusieurs traitements algorithmiques successifs pour analyser et modifier les trames en temps réel, ce qui introduit des latences notables et limite le débit de transmission.

De plus, la dépendance à des logiciels expose le système à des vulnérabilités potentielles, augmentant les risques de défaillances ou d'attaques malveillantes.

Un autre inconvénient est que ces solutions nécessitent une maintenance régulière, des mises à jour logicielles et une gestion complexe des configurations, ce qui accroît les coûts opérationnels et la probabilité d'erreurs humaines.

La présente invention a pour objectif de fournir une solution matérielle aux inconvénients précités.

### Objet et résumé de l'invention

Afin de répondre à ce ou à ces inconvénients, il est proposé selon un premier objet des présentes, un système de séparation de réseaux, ledit système comprenant une interface d'entrée configurée pour recevoir des trames de données depuis un réseau source, lesdites trames de données comportant des informations d'adresse source et d'adresse destination, un module d'analyse et de filtrage connecté à l'interface d'entrée et configuré pour classifier les trames selon des critères prédéterminés, un module de modification d'adresses connecté audit module d'analyse et de filtrage et configuré pour substituer, en fonction d'un indicateur de correspondance contenu dans une base de données de translation d'adresses, appelée station de base, une partie des informations d'adresse source et une autre partie des informations d'adresse destination des trames classifiées, ladite station de base, qui est connectée audit module de modification d'adresses, une interface de sortie connectée à la station de base et/ou au module de modification d'adresses, ladite interface de sortie étant configurée pour transmettre les trames de données modifiées vers un réseau de destination.

Dans les présentes, une trame de données modifiée est une trame de donnée pour laquelle le module de modification d'adresses a mis en oeuvre la substitution d'une partie des informations d'adresse source et d'une autre partie des informations d'adresse destination en fonction de la table de correspondance contenue dans la station de base.

Dans les présentes, un indicateur de correspondance est par exemple enregistré dans une table de correspondance, ladite table de correspondance pouvant, en particulier, être identique à la base de données de translation d'adresses et/ou définie par une pluralité de mémoires ou de cases mémoires, ces cases mémoire pouvant être ordonnées en fonction de différents identificateurs de flux.

Dans les présentes, un indicateur de correspondance peut dépendre directement de la valeur d'un indicateur de flux des trames de données, cet indicateur de flux pouvant être, de manière non limitative, un identifiant de protocole, un numéro de port TCP ou UDP, une adresse IP source ou destination, un identifiant de session, ou toute combinaison de ces éléments.

Selon un mode de réalisation possible, les trames de données sont des trames Ethernet.

Les avantages obtenus par l'invention décrite dans les présentes reposent sur une approche structurée de commutation de trames dans laquelle les modifications d'adresses réseau ainsi que la mise à jour des sommes de contrôle associées (checksums) sont différées jusqu'à la phase terminale de traitement, c'est-à-dire immédiatement avant la retransmission de la trame depuis un port de sortie. Contrairement aux procédés de l'état de la technique qui impliquent un traitement partiel et anticipé des trames en entrée, un mécanisme de calcul incrémental des sommes de contrôle est mis en œuvre au fur et à mesure de la réception des octets de la trame, sans altération de la charge utile et sans consommation supplémentaire de ressources de traitement.

Avantageusement, les valeurs des sommes de contrôle et les adresses de destination peuvent être injectées ou mises à jour de manière ciblée dans une zone de fin de trame. Ce mode opératoire permet une adaptation efficace des champs de l'en-tête d'un trame sans nécessiter de traitement correctif a posteriori, tout en garantissant une cohérence intégrale des trames transmises.

Dans les présentes ou selon un mode de réalisation possible, la classification d'une trame selon des critères prédéterminés comprend une indentification de ladite trame, une indexation de la trame, un stockage de la trame avec un identifiant ou sans identifiant et/ou une mise en correspondance de la trame avec une table de règles.

Selon un mode de réalisation, les informations d'adresse des trames de données comprennent des adresses MAC, des adresses IP et des ports TCP/UDP.

Selon un mode de réalisation, l'interface d'entrée et l'interface de sortie sont configurées pour traiter des trames de données correspondant à des communications utilisant les protocoles UDP et TCP.

Selon un mode de réalisation, au moins l'un desdits critères prédéterminés est sélectionné parmi un protocole de communication des trames de données, un type de trame, une information d'adresse source des trames de données, une information d'adresse destination des trames de données, un port de communication associé aux trames de données et des règles de filtrage préenregistrées définies en fonction de paramètres de réseau prédéfinis.

Selon un mode de réalisation, le système comprend en outre :
- un module d'encapsulation connecté audit module de modification d'adresses et configuré pour assembler plusieurs blocs de données de la trame, pour insérer un bloc de fin de trame à l'au moins une des trames de données de sorte à former une trame de données modifiée, pour calculer une somme de contrôle d'une trame de données ou d'une trame de données modifiée,
- optionnellement, un module de gestion du temps connecté audit module d'encapsulation et configuré pour synchroniser les opérations dudit module d'encapsulation,
- optionnellement, un module de contrôle d'émission connecté audit module de gestion du temps, ledit module de contrôle d'émission étant configuré pour vérifier une intégrité des trames de données et pour vérifier une redondance cyclique des trames de données, et/ou
- au moins une unité de traitement connectée audit module d'analyse et de filtrage et/ou à la station de base, ladite au moins une unité de traitement étant configurée pour réaliser un traitement des trames de données, sur au moins une information d'adresse source et/ou sur au moins une information d'adresse destination des trames.

Selon un mode de réalisation possible, le module de contrôle d'émission est configuré pour intégrer, aux trames de données modifiées qui sont destinées à être transmises par l'interface de sortie du système, une en-tête de sortie et/ou la somme de contrôle calculée d'une trame de données ou d'une trame de données modifiée.

Dans les présentes, une trame de données en entrée peut être décomposée en autant de blocs de données que permis par le protocole associé. Par exemple, de manière non limitative, des trames Ethernet ont une taille de minimum 64 bytes et de maximum 1518 bytes.

Selon un mode de réalisation possible, ces trames comprennent une pluralité de blocs de données ordonnés et/ou de taille prédéterminée, et ces trames sont reçues par le système par parties de 256 bytes. Ces trames sont de préférence aussi traitées par parties de 256 bytes, chaque partie comprenant les informations et les indicateurs utiles à la reconnaissance de la trame et à son traitement.

Dans un mode de mise en œuvre spécifique, la taille de 256 bytes est alignée sur la granularité interne du système, correspondant à huit transferts consécutifs de 256 bits, unité d'échange élémentaire avec le bus de communication interne. Ce découpage permet une efficacité maximale dans le transfert et le traitement local des données.

Selon un mode de réalisation possible, avant que la trame ou ses 256 premiers bytes ne soit émis(e) par le système, celle-ci est modifiée de sorte à se voir précédée par des valeurs d'encapsulation, par exemple en en-tête, ces valeurs d'encapsulation correspondant à l'assemblage des blocs de données de la trame par le module d'encapsulation.

Selon un mode de réalisation possible, le module de contrôle d'émission est configuré pour intégrer une en-tête de sortie et/ou les checksums à la trame destinée à être émise par le système. Cette intégration peut se faire sans qu'une encapsulation, une dés-encapsulation et/ou une reconstruction n'ait précédemment été mise en œuvre lors de l'entrée.

Selon un mode de réalisation possible, une reconstruction de la trame complète est mise en œuvre lors de la sortie, c'est-à-dire lors de l'émission de la trame par l'interface de sortie du système.

Selon différents modes de réalisation possible, le système est dépourvu de processeur exécutant un logiciel. Avantageusement, la modification et la transmission des trames sont ainsi réalisées exclusivement par des modules matériels intégrés garantissant un traitement en temps réel.

Encore afin de répondre aux inconvénients précités, il est proposé selon un autre objet des présentes, un procédé de traitement de trames de données dans un système de séparation de réseaux, ledit système comprenant une interface d'entrée, un module d'analyse et de filtrage, un module de modification d'adresses, une base de données de translation d'adresses, appelée station de base, et une interface de sortie, ladite interface d'entrée étant connectée au module d'analyse et de filtrage, ledit module d'analyse et de filtrage étant connecté audit module de modification d'adresses et à ladite base de données de translation d'adresses, ladite station de base étant connectée à ladite interface de sortie, le procédé comprenant les étapes de :
a) recevoir, par l'interface d'entrée, des trames de données comportant des informations d'adresse source et d'adresse destination,
b) classifier, au moyen du module d'analyse et de filtrage, les trames de données, ladite classification étant mise en œuvre selon des critères prédéterminés,
c) substituer, au moyen du module de modification d'adresses et/ou d'un indicateur de correspondance contenu dans la station de base, une partie des informations d'adresse source et une autre partie des informations d'adresse destination des trames de données classifiées,
d) émettre, par l'interface de sortie, les trames de données modifiées vers un réseau de destination.

Selon un mode de réalisation, au moins l'un des critères prédéterminés de l'étape b) de classification est sélectionné parmi un protocole de communication des trames de données, un type de trame, une information d'adresse source des trames de données, une information d'adresse destination des trames de données, un port de communication associé aux trames de données et des règles de filtrage préenregistrées définies en fonction de paramètres de réseau prédéfinis.

Selon un mode de réalisation, le procédé comprend en outre, avant la mise en œuvre de l'étape c) de substitution et après la mise en œuvre de l'étape a) de réception, une sous-étape d'interrogation, par le module d'analyse et de filtrage, de l'indicateur de correspondance pour définir les informations d'adresse source et les informations d'adresse destination des trames classifiées à substituer.

Selon un mode de réalisation, le procédé comprend en outre, avant la mise en œuvre de l'étape d) d'émission et après la mise en œuvre de l'étape de substitution, au moins l'une des étapes suivantes :
- optionnellement, encapsuler plusieurs blocs de données de la trame, au moyen d'un module d'encapsulation du système, ledit module d'encapsulation étant connecté au module de modification d'adresses, ladite étape d'encapsulation comprenant une sous-étape d'assemblage de plusieurs blocs de données, une sous-étape d'insertion d'un bloc de fin de trame à l'au moins une des trames de données de sorte à former une trame de données modifiée et/ou une sous-étape de calcul d'une somme de contrôle d'une trame de données ou d'une trame de données modifiée,
- optionnellement, transmettre les trames de données modifiées vers la station de base,
- optionnellement, vérifier, au moyen d'un module de contrôle d'émission connecté à un module de gestion du temps du système et/ou à la station de base, l'intégrité des trames de données reçues et/ou des trames de données modifiées, ladite vérification comprenant un calcul d'une somme de contrôle d'une trame de données ou d'une trame de données modifiée,
- commuter, au moyen de la station de base, plusieurs trames entre elles, ladite commutation étant mise en œuvre sur la base de l'indicateur de correspondance contenu dans la station de base, et/ou
- optionnellement, reconstituer l'une des trames de données modifiées sur la base d'un calcul de sommes de contrôle et/ou d'une vérification de redondance cyclique de ladite trame de données modifiée,
l'étape d'encapsulation, l'étape de substitution et/ou l'étape de commutation comprenant une attribution d'une nouvelle partie d'informations d'adresse source et d'une autre nouvelle partie d'informations d'adresse destination aux trames de données.

Selon un mode de réalisation,
- l'étape d'interrogation de l'indicateur de correspondance est mise en œuvre sur la base d'un indicateur de flux associé aux trames de données reçues, ledit indicateur de flux étant déterminé lors de l'étape de classification,
- l'étape d'émission des trames comprend une fragmentation des trames en blocs de données avant l'étape d'encapsulation des blocs de données modifiées, et/ou
- l'étape de transmission des blocs de données encapsulés comprend un contrôle réalisé en fonction d'un signal de synchronisation délivré par un module de gestion du temps connecté au module de contrôle d'émission, ladite transmission étant effectuée vers la station de base, vers l'interface de sortie et/ou vers un module d'émission du système.

Selon différents modes de réalisation possible, le procédé et/ou le fonctionnement du système est conçu pour être synchrone.

L'invention vise à garantir une transmission intègre et dans un délai maximal défini, indépendamment du protocole utilisé.

L'invention vise aussi à permettre une parallélisation maximale entre la réception d'une trame, son décodage et son filtrage afin d'accroître les performances en vitesse de traitement.

### Brève description des figures

D'autres caractéristiques, détails et avantages apparaîtront à la lecture de la description détaillée ci-après, et à l'analyse des dessins annexés, comprenant les figures suivantes.
La figure 1 représente un système de traitement de trames pour une séparation de réseaux selon un ou plusieurs modes de réalisation de l'invention.
La figure 2 représente un organigramme de différentes étapes d'un procédé de traitement de trames selon un ou plusieurs modes de réalisation de l'invention.
La figure 3 représente un indicateur de correspondance, c'est-à-dire une table de translation d'adresses, contenu dans la station de base, pour un procédé de traitement de trames selon un ou plusieurs modes de réalisation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description détaillée

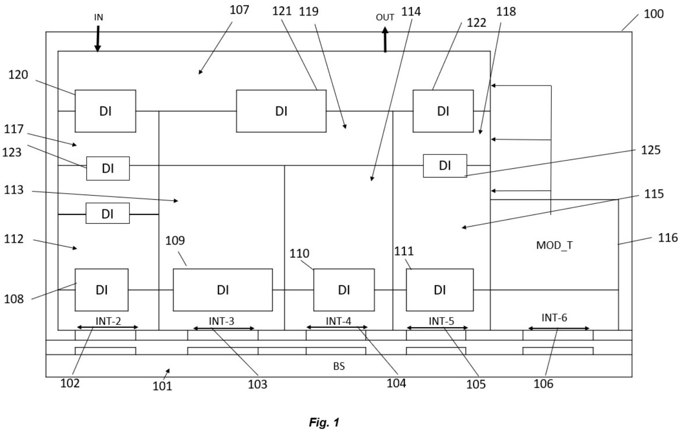

Un système de traitement de trames selon des modes de réalisation est décrit en référence à la figure 1.

En particulier, est illustré un mode de réalisation d'un système de séparation de réseaux conçu pour modifier les adresses de trames entre deux réseaux distincts.

Avantageusement, cette modification se fait en temps réel, par exemple pour des trames « UDP » et « TCP ».

Dans les présentes, un protocole « UDP » est aussi appelé « User Datagram Protocol », et est un protocole de communication utilisé sur Internet pour les transmissions particulièrement sensibles au facteur temps, telles que la lecture de vidéos.

Toujours dans les présentes, un protocole « TCP » est aussi appelé « Transmission Control Protocol », et est une norme de communication qui permet à plusieurs dispositifs informatiques d'échanger des messages sur un réseau. Ces échanges sont par exemple mis en œuvre par l'envoi de paquets sur Internet, l'emploi de trames TCP permettant d'assurer la transmission réussie des données sur les réseaux.

Le système de la figure 1 est représenté et réalisé de manière matérielle, c'est-à-dire qu'il n'est pas contrôlé de manière logicielle. Le système est par exemple réalisé sous forme de circuit de type FPGA (acronyme de « Field-Programmable Gate Array »).

Selon un mode de réalisation, le système comprend au moins un module d'échange de données 100, appelé « ComSet », qui permet d'assurer la gestion de communications et la transmission de trames éventuellement modifiées entre deux réseaux distincts. Les trames entrantes dans le système sont dénotées par « IN » tandis que les trames sortantes sont dénotées par « OUT ».

Selon un mode de réalisation, le système comprend un ou plusieurs modules de base de données 101, appelé(s) « station(s) de base » 101, et noté « BS ». Chaque base de données permet le stockage de données échangées entre les modules d'échange.

Optionnellement, le nombre de modules d'échange est égal au nombre de ports de communication souhaités pour le système. Ces ports de communication sont connectés aux réseaux sources et cibles du système.

Selon un mode de réalisation, les connections entre les différents modules, les différents sous-modules et les différentes interfaces du système sont celles représentées sur la figure 1.

Selon un mode de réalisation, les modules d'échange 100 sont connectés à la ou aux stations de base 101 au moyen d'une interface standardisée appelée « DI », c'est-à-dire que l'interface est la même pour tous les modules 120, 121, 122, 123, 125, 108, 109, 110, 111, qu'ils soient des modules de communication ou non.

Optionnellement, l'interface standardisée « DI » connectant les modules d'échange 100 à la ou aux stations de base 101 comporte autant de bus de transport de données que de modules en communication directe avec la base de données.

Selon un mode de réalisation, les interfaces « DI » du système comprennent un ou plusieurs bus de communication, ces bus étant configurés pour fonctionner avec ou sur la base de mémoires à double accès.

Avantageusement, une telle configuration permet d'assurer une indépendance de fonctionnement entre les modules ou les sous-modules amonts et avals. On minimise ainsi également la latence, fournissant donc une bande passante supérieure au débit maximal de chaque transmission. Un fonctionnement en mode « famine » est aussi possible.

Selon un mode de réalisation, l'interface standardisée 120 permet la réception des trames en entrée (« IN ») et agit comme une interface réseau en amont des modules traitant ces trames. On garantit ainsi que les trames entrantes sont traitées indépendamment du protocole utilisé et communiquées aux différents sous-modules du système, assurant une distribution efficace des trames aux modules de traitement appropriées.

Selon un mode de réalisation, le système comprend un sous-module 112 est inclus au système et configuré pour encapsuler des trames de données « IN » reçues et à traiter au sein du système. Le sous-module 112 peut communiquer avec la base de données « BS » via une interface 102, appelée « INT-2 ».

Selon un mode de réalisation possible, la translation d'adresses est mise en œuvre avant une encapsulation des trames, ou simultanément. Avantageusement, selon un mode de réalisation, le sous-module 112 est configuré pour appliquer un calcul d'une somme de contrôle (ou « checksum », en anglais), c'est-à-dire un traitement algorithmique appliqué à une trame de données, ce dernier permettant de générer une valeur de contrôle basée sur le contenu de cette trame, et permettant ainsi de détecter d'éventuelles erreurs de transmission ou d'altération des données.

Selon un mode de réalisation, le système comprend en outre un sous-module 113, configuré pour recevoir des commandes depuis le module d'échange de données 100 et, optionnellement, mettre en œuvre une connexion de commande entre les ports de communication du système et la ou les stations de base 101.

Selon un mode de réalisation, un autre sous-module 115, est inclus au système et est configuré pour générer des données ou des trames de données destinées à être émises, et intègre un traitement spécifique pour assurer la mise en place des calculs de sommes de contrôle, ou « checksums », et un éventuel calcul de contrôle de redondance cyclique, aussi appelé « CRC » (en anglais, « Cyclic Redundancy Check »). Ce contrôle permet de détecter des erreurs de transmission ou de transfert par ajout, combinaison et comparaison de données redondantes, obtenues par exemple grâce à une procédure de hachage.

Avantageusement, le sous-module 115 est interfacé et communique avec la station de base 101 via une interface 105, appelée « INT-5 ».

Selon un mode de réalisation, le système comprend en outre un module d'horloge 116, appelé « MOD_T », configuré pour réceptionner les mises à jour de l'heure ou d'une information temporelle générale du système depuis la station de base 101. Ainsi, il fournit cette heure ou cette information temporelle à tous les modules du système de transmission de données, afin par exemple d'estampiller les données pouvant ensuite être émises « OUT », et/ou de vérifier les délais de transmission de celles-ci.

Avantageusement, le module d'horloge 116 peut aussi générer les événements pour la fourniture des signaux de synchronisation aux processus qui en ont fait la demande. Il peut en outre prévenir les modules d'émission de données du moment de l'envoi de données lorsqu'elles sont définies comme cycliques par le paramétrage. Le module d'horloge 116 peut communiquer avec la base de données via une interface 106, appelée « INT-6 ».

Selon un mode de réalisation, les données échangées par un module d'échange sont reçues et envoyées au travers d'un module d'interface 107 appartenant au système, et qui assure l'interface des trames avec l'extérieur du système. Des exemples de protocoles avec lesquels le système peut être interfacé sont Ethernet, TCP/IP. Ce module peut aussi communiquer avec les autres modules du système via des interfaces asynchrones dédiées.

Avantageusement, la communication entre les différents sous-modules 112, 113, 114, 115 de chaque module d'échange avec les interfaces avec les bus de communication respectifs 102, 103, 104 et 105 peut se faire via les dispositifs d'interface « DI » numérotés respectivement 108, 109, 110 et 111, qui permettent de garantir l'indépendance des sous-modules en termes de fréquence d'accès et d'espace de stockage.

Selon un mode de réalisation, le système comprend en outre un module 117 d'analyse et de filtrage, qui est en particulier configuré pour traiter les trames de données reçues avant que celles-ci soient encapsulées par le module 112 avant d'être réémises par le système (« trames « OUT »). On applique ainsi un filtrage aux trames entrantes et extrait des informations associées aux flux.

Selon un mode de réalisation, le système comprend en outre un module 118 de contrôle d'émission, et qui est configurée pour vérifier chaque trame avant envoi par le système. Optionnellement, le module 118 est configuré pour désencapsuler une trame encapsulée reçue du module 115 avant sa transmission.

Selon un mode de réalisation, le système comprend en outre un module de gestion 118, qui permet en particulier de vérifier et gérer le statut des composants du système. Avantageusement, le module de gestion 118 est en charge de garder les états de fonctionnement courant de chacun des modules du système de transmission de données, en particulier si le paramétrage du système ou des trames à traiter l'exige.

Optionnellement, tous les modules du système sont conçus pour transmettre une information d'incident de fonctionnement au module de gestion de statut 118, qui peut alors mettre à jour sa base d'information et/ou générer un événement d'erreur en temps réel.

Selon un mode de réalisation optionnel, le dispositif d'interface 122 du module de contrôle d'émission 118 est configuré pour vérifier la conformité des trames avant leur émission et garantir leur intégrité en fonction des résultats des calculs effectués par le sous-module 115.

Selon un mode de réalisation, le système comprend en outre l'interface standardisée 120 pour assurer l'acheminement et la distribution des trames reçues entre le module d'interface 107 et le module d'analyse et de filtrage 117, et/ou l'interface standardisée 125 pour faciliter la transmission des trames contrôlées avant émission entre le module de contrôle d'émission 118 et le sous-module 115 de génération des données à émettre.

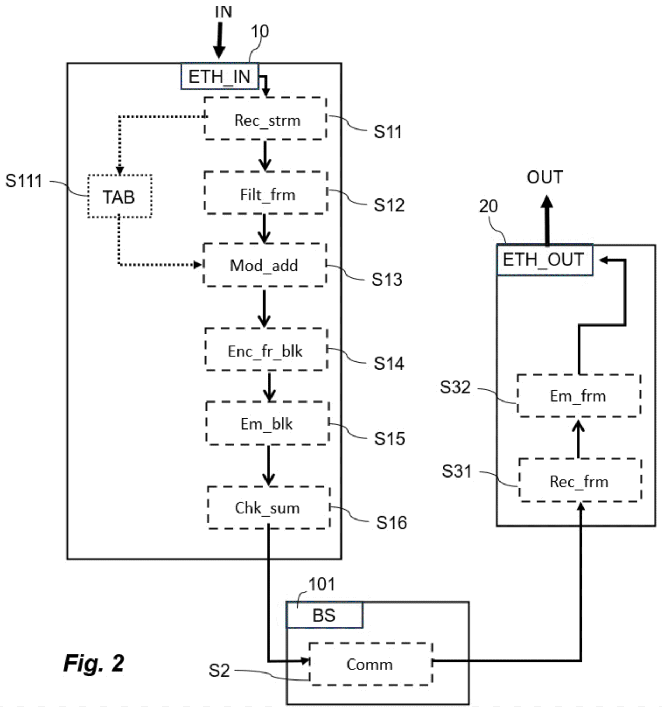

La figure 2 est un organigramme qui illustre différentes étapes d'un procédé de traitement de trames selon un ou plusieurs modes de réalisation de l'invention.

En particulier, des étapes S11, S111, S12, S13, S14, S15, S16, S2, S31 et S32 d'un procédé de traitement de trames Ethernet, c'est-à-dire de trames transmises selon un protocole de communication réseau basé sur le modèle OSI et utilisant des adresses MAC pour identifier les équipements au sein d'un réseau local, et impliquant une translation desdites adresses correspondantes, sont illustrées.

Comme représenté, le procédé débute par une première étape S11, correspondant à l'acronyme « Rec_stm », qui prévoit de recevoir et reconnaître un flux de trames Ethernet via une interface d'entrée « ETH-IN » du système précédemment décrit ou d'un module 10 de réception dudit système. Cette réception permet d'effectuer une reconnaissance du flux entrant pour ensuite alimenter le système en une ou plusieurs trames à traiter, et notamment, à faire suivre la reconnaissance de flux d'entrée d'un traitement de cette ou de ces trames, et d'une transmission vers une interface de sortie « ETH-OUT » du système précédemment décrit ou d'un module 20 d'émission de ce système.

Selon un mode de réalisation, à la première étape S11 succède de préférence une deuxième étape dénotée S12, correspondant à l'acronyme « Filt_frm », qui comprend le filtrage des trames reçues, par exemple afin d'identifier celles nécessitant un traitement spécifique. Avantageusement, cette étape permet d'éliminer les trames ne correspondant pas aux critères définis par le système et d'optimiser la gestion des ressources du système.

Selon différents modes de réalisation possibles :
- ladite étape de filtrage S12 est exécutée sur la base d'informations extraites lors de l'étape précédente S11, et plus particulièrement à partir de la reconnaissance du flux de trames reçues, laquelle peut inclure une translation d'adresse préalable permettant d'accéder à des paramètres de configuration du système,
- ladite reconnaissance de flux est mise en œuvre à partir de la valeur de l'adresse IP cible contenue dans la trame reçue, et/ou
- optionnellement, les ports UDP ou TCP cibles peuvent également être pris en compte dans cette reconnaissance de flux,

Avantageusement, l'identification d'un flux au sein du système est fondée sur ladite adresse IP cible et, de manière facultative, sur les ports UDP et/ou TCP cibles extraits de la trame analysée.

En outre, la reconnaissance du flux permet d'affecter un identifiant interne à la trame reçue, et cet identifiant interne est ensuite utilisé pour accéder à une configuration du système stockée localement, ladite configuration définissant notamment les règles de filtrage à appliquer au flux identifié.

Selon différents modes de réalisation possibles :
- des règles de filtrage applicables comprennent une vérification que les paramètres du flux entrant correspondent à une ou plusieurs conditions prédéfinies dans la configuration, telles que la présence d'une adresse IP source déterminée attendue,
- les trames pour lesquelles aucun identifiant de flux valide n'est retrouvé dans lesdites configurations sont éliminées du traitement ultérieur par le système, et/ou
- un même identifiant de flux est utilisé pour accéder à des instructions de translation d'adresses, lesquelles peuvent déterminer, en fonction de la configuration associée, quelles informations d'adresse source ou destination doivent être modifiées au sein de la trame.

Selon un mode de réalisation, au cours de cette deuxième étape S12, une ou plusieurs sous-étapes peuvent être déclenchées par la première étape S11 de reconnaissance de flux entrant(s). mises en œuvre. En particulier, une sous-étape S111, correspondant à l'acronyme « TAB », prévoit l'interrogation d'un indicateur de correspondance, c'est-à-dire d'une table de translation d'adresses, contenu dans la station de base, sur la base du flux reconnu, et en vue d'effectuer une éventuelle modification d'une ou de plusieurs adresses des trames issues du flux entrant.

Selon différents modes de réalisation possibles :
- ladite sous-étape S111 est déclenchée uniquement pour les trames ayant satisfait aux critères de filtrage définis à l'étape S12, de sorte que seule une trame filtrée, c'est-à-dire reconnue et acceptée, est ensuite soumise à un traitement de translation d'adresses, et/ou
- l'identifiant de flux affecté à la trame lors de l'étape S11 est utilisé comme clé d'interrogation de la table de translation d'adresses, ladite table définissant, pour chaque identifiant de flux, les paramètres d'adressage à modifier dans la trame correspondante.

Ce mécanisme garantit que la translation est effectuée de manière déterministe et spécifique au contexte du flux identifié.

Avantageusement, l'interrogation de l'indicateur de correspondance, ou la table de translation d'adresses, de l'étape S111 et/ou le filtrage des trames de l'étape S12 permet d'associer un indicateur de flux, aux trames ensuite traitées par le système.

Selon un mode de réalisation, pour traiter ces trames, une troisième étape S13 succédant à la deuxième étape S12, et correspondant à l'acronyme « Mod_add », comprend la modification d'une ou de plusieurs adresses des trames Ethernet sur la base de la table de translation d'adresses. Par exemple, cette modification inclut l'ajustement des adresses MAC, IP et/ou TCP/UDP en fonction des informations issues de l'indicateur de flux déterminé précédemment.

Selon différents exemples possibles, dans le cas d'une transmission de trames d'un réseau « A » vers un réseau « B », les valeurs de remplacement sélectionnées dans la table de translation d'adresses sont celles définies dans les colonnes correspondant au réseau B, lesdites valeurs représentant les adresses de destination à substituer dans les trames. Les valeurs associées au réseau A ne sont, dans cette direction de transmission, ni utilisées ni appliquées auxdites trames.

Avantageusement, les valeurs du réseau A sont uniquement pertinentes pour les flux de trames circulant en sens inverse, à savoir de « B » vers « A », auquel cas lesdites valeurs A sont utilisées pour rétablir les adresses d'origine
Selon un mode de réalisation, ensuite, au cours d'une quatrième étape S14, correspondant à l'acronyme « Enc_fr_blk », une encapsulation des trames Ethernet est effectuée. Cette encapsulation comprend par exemple la fragmentation des trames en blocs de données, ces blocs étant destinés à être transmis successivement vers la station de base 101, vers l'interface de sortie « ETH-OUT » et/ou vers un module 20 d'émission du système.

Selon un mode de réalisation, à la quatrième étape S14 succède une cinquième étape S15, correspondant à l'acronyme « Em_blk », et comprenant l'émission ou le transfert des blocs de trames encapsulées vers la station de base 101, vers l'interface de sortie « ETH-OUT » et/ou vers un module 20 d'émission du système. Dans le cas illustré, les blocs obtenus de la fragmentation des trames sont destinés à d'abord être transmis à la station de base 101, comme décrit ci-après, pour la mise en œuvre d'une étape S2 de commutation.

Selon un mode de réalisation, à la cinquième étape S15 succède une sixième étape S16, correspondant à l'acronyme « Chk_sum », qui est mise en œuvre pour effectuer le calcul de sommes de contrôle pour les trames précédemment décrites.

Comme décrit précédemment, cette cinquième étape est par exemple mise en œuvre par le sous-module 112, et prévoit d'appliquer aux trames de données qu'il reçoit un traitement algorithmique, ce dernier permettant d'obtenir une valeur de contrôle basée sur le contenu de cette trame, par exemple un nombre, celui-ci permettant de détecter d'éventuelles erreurs de transmission ou d'altération des données.

Selon un mode de réalisation, le calcul d'une ou de plusieurs sommes de contrôle lors de cette sixième étape comprend l'insertion d'un bloc de fin de trame contenant les sommes de contrôle générées.

Selon un mode de réalisation, lors de l'étape S2, une commutation de plusieurs trames, par exemple une trame « A » avec une trame « B » est réalisée par la station de base 101.

Avantageusement, une commutation prévoit d'assurer le transport des trames de données entre différents modules du système selon un protocole prédéfini, sans recours à des unités de traitement contrôlées par un logiciel.

Selon un mode de réalisation, la commutation de l'étape S2 est mise en œuvre de manière entièrement matérielle. En particulier, cette commutation assure un acheminement des trames à travers le système en garantissant l'application d'une translation d'adresses.

Selon un mode de réalisation, la translation d'adresses mise en œuvre et dynamique et bidirectionnelle entre deux réseaux distincts.

Avantageusement, contrairement aux commutateurs classiques qui ne font qu'acheminer les trames selon des règles de routage prédéfinies, la station de base 101 met en œuvre une séparation des flux en modifiant systématiquement les adresses des trames UDP et TCP lors de leur passage d'un réseau à l'autre.

Selon un mode de réalisation, cette commutation prévoit ensuite un transfert des trames traitées entre les différents modules du système, notamment entre la station de base 101 et un module de sortie 20 ou une interface réseau telle que « ETH_OUT ».

Selon un mode de réalisation, ledit transfert est réalisé sur la base des informations de traitement appliquées lors des étapes précédentes, en particulier la modification des adresses à l'étape S13 et l'encapsulation en blocs à l'étape S14.

Avantageusement, afin d'assurer une isolation complète entre les deux réseaux, la commutation de l'étape S2 s'appuie sur une table de translation commune permettant d'attribuer de nouvelles adresses aux trames selon la direction du trafic.

Par exemple, à chaque passage d'un réseau à l'autre, une réécriture complète des adresses des trames est effectuée en fonction des données enregistrées dans la table de translation, de sorte que le flux retour subit une translation inverse mais strictement symétrique.

Selon un mode de réalisation, la mise en œuvre de cette commutation matérielle permet d'effectuer la translation des adresses à la volée, à la vitesse des flux entrants, sans recours à un processeur ni à un logiciel. Avantageusement, les trames sont donc traitées en temps réel, sans impact sur le débit du système, et avec la garantie d'une séparation stricte des espaces d'adressage réseau tout en permettant une communication contrôlée et sécurisée entre les deux réseaux.

Selon un mode de réalisation, suite à ce traitement lors de l'étape S2 au moyen de la station de base 101, deux étapes S31 et S32 sont mises en œuvre dans le cadre de l'émission sortante, par l'interface de sortie « ETH-OUT », des trames ainsi traitées. Ce transfert est réalisable sur la base des informations de traitement appliquées lors des étapes précédentes, en particulier la modification des adresses à l'étape S13 et l'encapsulation en blocs à l'étape S14.

En particulier, selon un mode de réalisation, l'étape S31 correspondant à l'acronyme « Rec_frm » est mise en œuvre suite à l'étape S2 et comprend la mise en œuvre d'une reconstitution des trames complètes destinées à être transmises vers le réseau de destination.

Selon mode de réalisation, cette reconstitution comprend un assemblage des données issues des traitements réalisés dans les étapes antérieures, notamment la substitution des adresses à l'étape S13 et l'encapsulation à l'étape S14, en intégrant les valeurs de contrôle préalablement calculées et temporairement placées en fin de trame. Selon un mode de réalisation, l'étape S32 correspondant à l'acronyme « Em_frm » succède à l'étape S31 et comprend l'émission de la trame modifiée vers l'interface Ethernet de sortie « ETH_OUT » ou du module de sortie 20, et finalement hors du système.

Selon un mode de réalisation, l'étape S32 démission comprend un calcul d'une somme de contrôle de type « CRC », c'est-à-dire de « Contrôle de Redondance Cyclique », applicable à la trame complète reconstituée.

Avantageusement, ce calcul de CRC est effectué à la volée au moment de l'émission de la trame, sans qu'il soit nécessaire de recalculer d'autres sommes de contrôle, évitant ainsi de consommer des ressources supplémentaires, et telles que les checksums, qui ont été calculées en amont, au moment de la réception et du traitement progressif des trames entrantes.

Par exemple, les valeurs desdites sommes de contrôle sont insérées à la fin de la trame pendant les étapes internes de traitement, puis replacées dans les champs d'en-tête appropriés au moment de l'émission, profitant du fait que l'ensemble de la trame est alors disponible en mémoire, ce qui permet d'éviter tout traitement redondant.

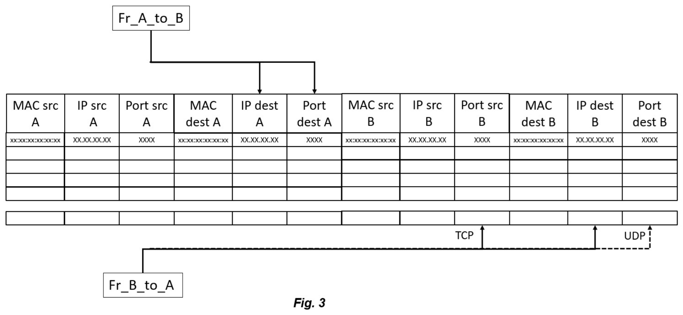

La figure 3 illustre une table de translation d'adresses et des données, pour mettre en œuvre un procédé de traitement de trames.

En particulier, la mise en œuvre de cette translation d'adresses lors des étapes du procédé décrit dans la figure précédente illustrée pour montrer comment sont séparés, au travers du traitement des trames, des ports d'un premier type « A » des ports d'un deuxième type « B ».

Avantageusement, une telle table de translation d'adresses est mise en œuvre au sein du système de séparation de réseaux décrit précédemment, selon un ou plusieurs modes de réalisation de l'invention.

Avantageusement, l'utilisation d'une table de translation d'adresses permet aussi d'associer un indicateur de flux aux trames identifiées, permettant une modification dynamique des en-têtes. Après reconnaissance du flux et filtrage des trames, les adresses MAC, IP et TCP/UDP sont modifiées.

Selon un mode de réalisation, chaque entrée de cette table associe une adresse MAC « source », une adresse IP « source » et un port « source » à une adresse MAC « destination », une adresse IP « destination » et un port « destination ». L'utilisation et/ou la mise en œuvre de cette table dans un dispositif informatique ou algorithmique permet d'assurer une translation d'adresses entre un premier réseau compatible avec le premier type (réseau « A ») et un deuxième réseau compatible avec le deuxième type (réseau « B »), ceci de manière bidirectionnelle et cohérente.

Selon un mode de réalisation, la translation d'adresses des trames transitant de A vers B est effectuée sur la base de clés de correspondance définies par l'adresse IP destination du réseau A et, en fonction du protocole de la trame, soit le port TCP destination soit le port UDP destination. Lorsqu'une correspondance est trouvée dans la table de translation, les adresses MAC, IP et port associées au réseau A sont remplacées par les adresses correspondantes du réseau B.

Selon un mode de réalisation, la translation des trames transitant de B vers A repose sur une correspondance inverse, en utilisant comme clés de la table l'IP destination B et le Port source B pour TCP, ainsi que l'IP destination B et le Port destination B pour UDP. La translation est alors appliquée en inversant les champs source et destination des adresses de la trame afin d'assurer une transmission correcte vers le réseau A.

Avantageusement, cette table garantit que la translation d'adresses est réalisée de manière totalement matérielle, sans intervention logicielle, permettant une modification des adresses à la vitesse des flux entrants. Cette configuration assure une séparation stricte des espaces d'adressage réseau, empêchant tout échange d'adresses d'un réseau vers l'autre et garantissant ainsi une isolation complète des communications.

Avantageusement, la distinction des ports TCP et UDP permet d'assurer une adaptation fine de la translation en fonction du type de protocole utilisé, garantissant ainsi une compatibilité avec différents types de transmissions tout en maintenant l'intégrité des flux de communication.

Selon un mode de réalisation, la correspondance définie dans la table de translation est symétrique pour les trames UDP, lesquelles utilisent comme indicateurs l'adresse IP destination et le port destination, tant à l'aller (trame allant de « A » vers « B ») qu'au retour (trame allant de « B » vers « A »), permettant une translation directe et réversible des adresses.

Selon un mode de réalisation, lorsque les trames sont des trames TCP, la symétrie de la translation d'adresses est rompue entre les deux directions, afin de répondre aux contraintes inhérentes à la gestion des connexions TCP. En particulier, du côté « A », l'adresse IP destination et le port TCP destination sont connus et utilisés comme paramètres ou clés de la translation. En revanche, côté « B », la trame de réponse ne permet pas de se fonder sur l'adresse IP ou le port TCP destination, ceux-ci n'étant pas connus ou maîtrisables par le système. La table de translation est alors indexée, pour les trames TCP de retour, sur la base du port TCP source, qui correspond au port destination connu du côté « A », permettant une réassociation.

Selon un mode de réalisation, une entrée de table de translation comporte en outre un champ d'identifiant de flux associé, permettant d'établir une liaison entre la direction du flux et le couple d'adresses modifiées, de sorte que la cohérence des communications soit maintenue indépendamment du protocole employé.

Avantageusement, le traitement obtenu par les différentes étapes précédentes permet d'optimiser le fonctionnement du système et d'éviter toute latence supplémentaire liée à la reconstruction des adresses, en particulier lors des transmissions bidirectionnelles sur des liaisons TCP asymétriques.

Il est évident pour l'homme de l'art que les modes de réalisation décrits dans les présentes peuvent être réalisés sous d'autres formes sans s'écarter des caractéristiques essentielles de la présente divulgation. En conséquence, les présentes ne doivent pas être interprétées comme restrictives dans tous ses termes, et la portée des modes de réalisation décrits dans les présentes doit être déterminée à la lecture des revendications ci-annexées.

Sans étendre l'objet des présentes au-delà du contenu qui précède, la divulgation additionnelle suivante est fournie aux fins de clarifier l'invention et ses différents modes de réalisation. Le système et le procédé selon les modes de réalisation de l'invention se distinguent fondamentalement des dispositifs de translation d'adresses réseau de type NAT ou NAPT de l'état de la technique par la combinaison de plusieurs caractéristiques techniques.
- Premièrement, contrairement aux dispositifs NAT ou NAPT conventionnels qui utilisent une adresse publique unique partagée entre plusieurs hôtes d'un réseau privé pour multiplexer les connexions sortantes, le système selon l'invention effectue une substitution complète et simultanée de l'ensemble des informations d'adresse lors du passage d'une trame d'un réseau à l'autre ; cette substitution complète comprend le remplacement simultané de l'adresse MAC source, de l'adresse MAC destination, de l'adresse IP source, de l'adresse IP destination, du port source et du port destination des trames de données classifiées ; cette approche assure aussi une isolation totale et bidirectionnelle des espaces d'adressage entre les deux réseaux, sans qu'aucune adresse d'un réseau ne soit visible depuis l'autre réseau ; les deux réseaux sont ainsi rendus complètement symétriques du point de vue de leur espace d'adressage, chaque réseau disposant de son propre espace d'adressage complet et indépendant, contrairement aux dispositifs NAT qui maintiennent une asymétrie entre le réseau privé et le réseau public.
- Deuxièmement, le système selon l'invention est réalisé de manière entièrement matérielle sous forme de circuits matériels intégrés, par exemple dans un circuit de type FPGA, et est dépourvu de processeur exécutant un logiciel pour effectuer les opérations de translation d'adresses ; tous les modules du système, notamment le module d'analyse et de filtrage, le module de modification d'adresses, le module d'encapsulation, le module de contrôle d'émission et la station de base, sont implémentés sous forme de circuits matériels intégrés garantissant un traitement en temps réel ; cette implémentation purement matérielle élimine toute latence logicielle et permet la substitution des adresses et la transmission des trames à la vitesse de la ligne, c'est-à-dire à la vitesse maximale du débit d'entrée des trames, par exemple à des débits de l'ordre du gigabit par seconde, sans ralentissement ni introduction de délai de traitement lié à l'exécution de logiciel.

- Troisièmement, le système selon l'invention met en œuvre une architecture de traitement en pipeline particulièrement optimisée pour le calcul et l'insertion des sommes de contrôle ; contrairement aux systèmes de l'état de la technique qui doivent retenir la trame complète en mémoire pour recalculer les checksums après modification des adresses, ce qui introduit une latence significative et réduit le débit du système, le système selon l'invention effectue un mécanisme de calcul incrémental des sommes de contrôle au fur et à mesure de la réception des octets de la trame, sans altération de la charge utile et sans consommation supplémentaire de ressources de traitement ; les valeurs des sommes de contrôle calculées sont temporairement injectées ou mises à jour de manière ciblée dans une zone de fin de trame, c'est-à-dire insérées dans un bloc de fin de trame pendant les étapes internes de traitement, puis replacées dans les champs d'en-tête appropriés uniquement au moment de l'émission finale de la trame par l'interface de sortie ; cette approche permet d'éviter de retenir la trame complète en mémoire avant de pouvoir la transmettre, ce qui aurait pour effet de ralentir le traitement et de réduire le débit du système, et permet ainsi d'assurer une gestion du flux à gigabit par seconde à la vitesse d'entrée des trames.

- Quatrièmement, grâce à la combinaison de l'implémentation entièrement matérielle sous forme de circuits matériels intégrés et de l'architecture de pipeline optimisée pour les checksums avec calcul incrémental et insertion différée, le système selon l'invention assure un traitement des trames à la volée, à la vitesse des flux entrants, sans recours à un processeur ni à un logiciel, et sans impact sur le débit du système ; les trames sont donc traitées en temps réel sans nécessiter de mise en mémoire tampon prolongée ni de cycles de traitement supplémentaires ; cette capacité de traitement à la vitesse de la ligne est rendue possible par le fait que les checksums sont calculés de manière incrémentale pendant la réception de la trame et insérés en fin de trame, évitant ainsi la nécessité de retenir la trame complète avant de pouvoir la transmettre, ce qui permet d'éviter tout traitement redondant et toute consommation supplémentaire de ressources de traitement.
   - Cinquièmement, la translation d'adresses mise en œuvre par le système est bidirectionnelle et strictement symétrique entre les deux réseaux distincts ; pour chaque flux de trames transitant du réseau A vers le réseau B, une réécriture complète des adresses des trames est effectuée en fonction des données enregistrées dans la table de translation, et une translation inverse mais strictement symétrique est appliquée aux trames de retour transitant du réseau B vers le réseau A, de sorte que le flux retour subit une translation inverse mais strictement symétrique ; cette symétrie bidirectionnelle garantit que les communications entre les deux réseaux sont totalement transparentes pour les applications et les hôtes de chaque réseau, tout en assurant une séparation stricte des espaces d'adressage réseau qui empêche toute visibilité directe des adresses d'un réseau depuis l'autre réseau et garantit ainsi une isolation complète des communications.
- L'ensemble de ces caractéristiques permet une séparation complète et symétrique de deux réseaux avec substitution simultanée complète de l'ensemble des adresses MAC, IP et ports source et destination, réalisée entièrement en matériel sans processeur exécutant un logiciel, à la vitesse de la ligne sans ralentissement ni latence logicielle, grâce à une architecture de pipeline optimisée permettant le calcul incrémental des checksums et leur insertion différée en fin de trame, évitant ainsi la nécessité de retenir la trame complète en mémoire avant transmission.

## Revendications

1. Système (100) de séparation de réseaux (A, B), ledit système (100) comprenant
• une interface d'entrée (107) configurée pour recevoir des trames de données depuis un réseau source (A), lesdites trames de données comportant des informations d'adresse source et d'adresse destination,
• un module d'analyse et de filtrage (117) connecté à l'interface d'entrée (107) et configuré pour classifier les trames de données reçues selon des critères prédéterminés,
• un module de modification d'adresses (113) connecté audit module d'analyse et de filtrage (117) et configuré pour substituer, en fonction d'un indicateur de correspondance contenu dans une base de données (101) de translation d'adresses, appelée station de base (101), simultanément une adresse MAC source, une adresse IP source et un port source, ainsi qu'adresse MAC destination, une adresse IP destination et un port destination des trames de données classifiées,
• ladite station de base (101), qui est connectée audit module de modification d'adresses (113),
• un module d'encapsulation (112) connecté audit module de modification d'adresses (113) et configuré pour assembler plusieurs blocs de données de la trame, pour insérer un bloc de fin de trame à l'au moins une des trames de données de sorte à former une trame de données modifiée, pour calculer une somme de contrôle d'une trame de données ou d'une trame de données modifiée,
• une interface de sortie (114) connectée à la station de base et/ou au module de modification d'adresses (113), ladite interface de sortie (114) étant configurée pour transmettre les trames de données modifiées vers un réseau de destination (B),
dans lequel le module d'analyse et de filtrage (117), le module de modification d'adresses (113), la station de base (101), le module d'encapsulation (112) et l'interface de sortie (114) sont réalisés sous forme de circuits matériels intégrés dépourvus de processeur exécutant un logiciel, de sorte que la substitution des adresses et la transmission des trames sont réalisées à la vitesse de la ligne sans latence logicielle.

2. Système (100) selon la revendication 1, dans lequel les informations d'adresse des trames de données comprennent des adresses MAC, des adresses IP et des ports TCP/UDP.

3. Système (100) selon la revendication 1 ou 2, dans lequel l'interface d'entrée (107) et l'interface de sortie (114) sont configurées pour traiter des trames de données correspondant à des communications utilisant les protocoles UDP et TCP.

4. Système (100) selon l'une quelconque des revendications précédentes, dans lequel au moins l'un desdits critères prédéterminés est sélectionné parmi un protocole de communication des trames de données, un type de trame, une information d'adresse source des trames de données, une information d'adresse destination des trames de données, un port de communication associé aux trames de données et des règles de filtrage préenregistrées définies en fonction de paramètres de réseau prédéfinis.

5. Système (100) selon l'une quelconque des revendications précédentes, comprenant en outre :
• un module de gestion du temps (116) connecté audit module d'encapsulation (112) et configuré pour synchroniser les opérations dudit module d'encapsulation (112), et/ou
• un module de contrôle d'émission (111) connecté audit module de gestion du temps (116), ledit module de contrôle d'émission (111) étant configuré pour vérifier une intégrité des trames de données et pour vérifier une redondance cyclique des trames de données.

6. Système (100) selon l'une quelconque des revendications précédentes, dans lequel le module de contrôle d'émission (111) est configuré pour intégrer, aux trames de données modifiées qui sont destinées à être transmises par l'interface de sortie (114) du système (100), une en-tête de sortie et/ou la somme de contrôle calculée d'une trame de données ou d'une trame de données modifiée.

7. Procédé de traitement de trames de données dans un système (100) de séparation de réseaux (A, B), ledit système (100) comprenant une interface d'entrée (107), un module d'analyse et de filtrage (117), un module de modification d'adresses (113), une base de données (101) de translation d'adresses, appelée station de base (101), un module d'encapsulation (112) et une interface de sortie (114), ladite interface d'entrée (107) étant connectée au module d'analyse et de filtrage (117), ledit module d'analyse et de filtrage (117) étant connecté audit module de modification d'adresses (113) et à ladite base de données (101) de translation d'adresses, ledit module d'encapsulation (112) étant connecté audit module de modification d'adresses (113), ladite station de base (101) étant connectée à ladite interface de sortie (114), le procédé comprenant les étapes de :
a) recevoir (S11), par l'interface d'entrée (107), des trames de données comportant des informations d'adresse source et d'adresse destination,
b) classifier (S12), au moyen du module d'analyse et de filtrage (117), les trames de données, ladite classification étant mise en œuvre selon des critères prédéterminés,
c) substituer (S13), au moyen du module de modification d'adresses (113) et d'un indicateur de correspondance contenu dans la station de base (101), simultanément une adresse MAC source, une adresse IP source et un port source, ainsi qu'une adresse MAC destination, une adresse IP destination et un port destination des trames de données classifiées,
d) calculer (S16), au moyen du module d'encapsulation (112), de manière incrémentale une somme de contrôle d'une trame de données au fur et à mesure de la réception des octets de la trame, et insérer ladite somme de contrôle en fin de trame avant émission,
e) émettre (S32), par l'interface de sortie (114), les trames de données modifiées vers un réseau de destination (B),
dans lequel le module d'analyse et de filtrage (117), le module de modification d'adresses (113), la station de base (101), le module d'encapsulation (112) et l'interface de sortie (114) sont réalisés sous forme de circuits matériels intégrés dépourvus de processeur exécutant un logiciel, de sorte que la substitution des adresses et la transmission des trames sont réalisées à la vitesse de la ligne sans latence logicielle.

8. Procédé selon la revendication 7, dans lequel au moins l'un des critères prédéterminés de l'étape b) de classification (S12) est sélectionné parmi un protocole de communication des trames de données, un type de trame, une information d'adresse source des trames de données, une information d'adresse destination des trames de données, un port de communication associé aux trames de données et des règles de filtrage préenregistrées définies en fonction de paramètres de réseau prédéfinis.

9. Procédé selon l'une quelconque des revendications 7 ou 8, comprenant en outre, avant la mise en œuvre de l'étape c) de substitution (S13) et après la mise en œuvre de l'étape a) de réception (S11), une sous-étape (S111) d'interrogation, par le module d'analyse et de filtrage (117), de l'indicateur de correspondance, pour définir les informations d'adresse source et les informations d'adresse destination des trames classifiées à substituer.

10. Procédé selon l'une quelconque des revendications 7 à 9, comprenant en outre, avant la mise en œuvre de l'étape d) d'émission (S32) et après la mise en œuvre de l'étape d) de calcul de somme de contrôle (S16), au moins l'une des étapes suivantes :
- transmettre (S15) les trames de données modifiées vers la station de base (101),
- commuter (S2), au moyen de la station de base (101), plusieurs trames entre elles, ladite commutation étant mise en œuvre sur la base de l'indicateur de correspondance contenu dans la station de base (101), et/ou
- reconstituer (S31) l'une des trames de données modifiée sur la base d'un calcul de sommes de contrôle et/ou d'une vérification de redondance cyclique de ladite trame de données modifiée.

11. Procédé selon la revendication 9 ou 10, dans lequel :
- l'étape d'interrogation de l'indicateur de correspondance (S111) est mise en œuvre sur la base d'un indicateur de flux associé aux trames de données reçues, ledit indicateur de flux étant déterminé lors de l'étape de classification (S12), et/ou
l'étape de transmission (S15) des trames de données modifiées comprend un contrôle réalisé en fonction d'un signal de synchronisation délivré par un module de gestion du temps (116) connecté au module de contrôle d'émission (111), ladite transmission étant effectuée vers la station de base (101), vers l'interface de sortie (114) et/ou vers un module d'émission du système.
